# EUROPEAN PATENT APPLICATION

(11) **EP 3 922 490 A1**
(43) Date of publication of application: **15.12.2021**
(21) Application number: 20179646.3
(22) Date of filing: 12.06.2020
(51) Int. Cl.: B60G 3/20, B60G 15/07

(54) **QUADRILATERAL-TYPE SUSPENSION FOR A MOTOR-VEHICLE**

(71) Applicant: FCA Italy S.p.A., 10135 Torino (IT)
(72) Inventor: TAVONI, Luca, 10135 Torino (IT); MESSINA, Alessandro, 10135 Torino (IT); PAVESIO, Carlo, 10135 Torino (IT); PASTORE, Fabrizio, 10135 Torino (IT)
(74) Representative: De Bonis, Paolo

(57) **Abstract**

Described herein is a steering articulated-quadrilateral suspension (1) for a motor vehicle, comprising:
- an upper oscillating arm (2), which can be connected in an articulated way to a frame (3) of a motor vehicle about a first axis (γ_{U});
- a lower oscillating arm (4), which can be connected in an articulated way to a frame (SB) of a motor vehicle about a second axis (γ_{U});
- a hub carrier (6) connected in an articulated way to the upper oscillating arm (2) at a first spherical articulation (8) and to the lower oscillating arm (4) at a second spherical articulation (10), the first spherical articulation (8) and the second spherical articulation (10) defining a steering axis (β) of said suspension (1); and
- an elastic-damping assembly (14) comprising a damper (16) having a longitudinal axis (δ), coaxially mounted on which is a coil spring (18),
wherein:
a first end (14A) of said damper (16) can be connected to the frame (VF) of said motor vehicle, and
a second end of said damper (16) is connected in an articulated way to said hub carrier (6) by means of an articulation (22) with axis (γ₂₂) incident on said steering axis (β) and incident on a further axis (ψ), which is in turn incident on and orthogonal to the steering axis (β) and incident on the longitudinal axis (δ) of said damper (16).

## Description

### Field of the invention

The present invention relates to suspensions of a quadrilateral type for motor vehicles, in particular to steering quadrilateral suspensions.

### Prior art

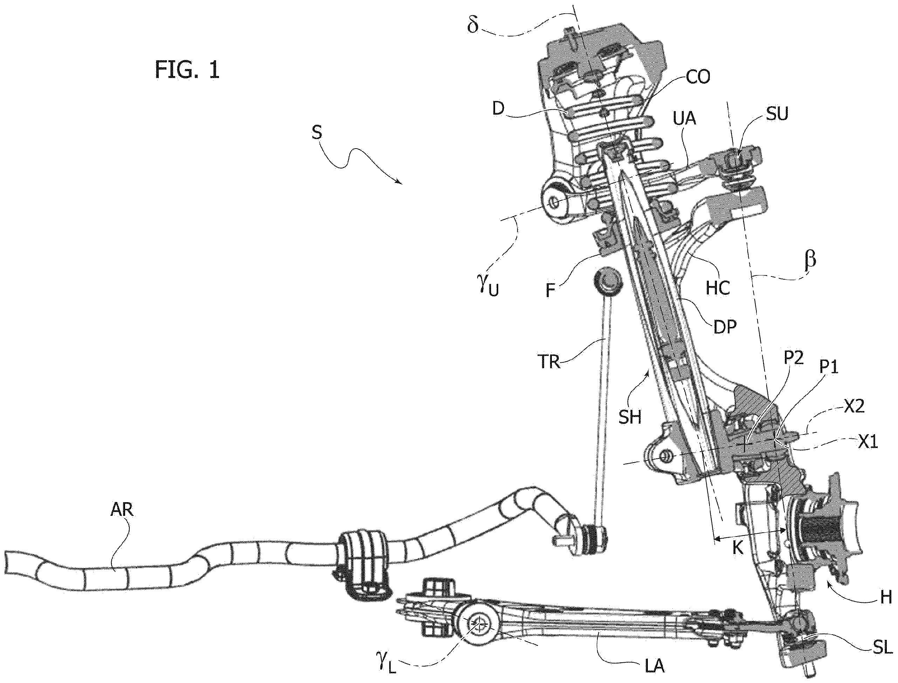

Figure 1 illustrates a steering quadrilateral suspension S for a motor vehicle of a known type already proposed by the present applicant. The suspension S is of the high-quadrilateral type and comprises: an upper oscillating arm UA connected in an articulated way to a frame of the motor vehicle about a first axis γ_{U}, in particular to a dome bearing D; a lower oscillating arm LA connected in an articulated way to the frame of the motor vehicle about a second axis γ_{L}; and a hub carrier HC connected in an articulated way to the arm UA and to the arm LA at two spherical articulations (e.g., ball joints) SL and SU. The articulation points SU, SL enable identification of a steering axis β of the suspension S.

The hub carrier HC houses a hub H of a driving type, but of course it can house a driven hub (for example, for rear-drive vehicles).

An elastic-damping assembly SH of the suspension 1 comprises a damper DP with longitudinal axis δ, mounted coaxially with respect to which is a coil spring CO. The coil spring CO is installed between a flange F fixed with respect to the cylinder of the damper DP and the dome bearing D, which also receives the top end of the stem of the damper DP.

The cylinder of the damper DP is connected in an articulated way to the hub carrier HC to define a double articulation, in particular a first articulation P1, with centre X1, of a spherical type, and a second articulation P2, with (transverse) axis X2, provided by means of a bushing. Moreover connected to the cylinder of the damper DP is a tie rod TR, by means of which the damper DP is connected to an antiroll bar AR.

As may be seen from the representation of Figure 1, in the suspension S there is a distance K between the articulation point P1 and the axis δ, which is hence able to generate a bending moment with respect to the axis δ itself. To a certain extent, the effect of this bending moment is amplified by the way the articulation between the damper DP and the hub carrier HC is built, which, since it is double, results in a lengthening of the arm, through which the forces exchanged generate the bending moment.

The bending moment thus generated has an impact on the steering behaviour, on the sizing of the spring CO (in particular, the sizing must be more generous the higher the modulus of the bending moment), and on the complexity of the bushings of the suspension for reasons similar to the ones set forth in regard to the spring CO.

### Object of the invention

The object of the present invention is to overcome the technical problems mentioned previously. In particular, the object of the invention is to reduce the bending moment with respect to the axis δ of the damper by reducing in general the complexity of the suspension, albeit maintaining excellent dynamic performance and steering performance.

### Summary of the invention

The object of the present invention is achieved by a suspension having the features forming the subject of the appended claims, which form an integral part of the technical disclosure provided herein in relation to the invention.

### Brief description of the drawings

The invention will now be described with reference to the annexed drawings, which are provided purely by way of non-limiting example and in which:
- Figure 1, described previously, illustrates a partially sectioned view of a quadrilateral suspension of a known type;
- Figure 2 is a lateral view of a quadrilateral suspension according to the invention;
- Figure 3 is a cross-sectional view of the suspension of the invention according to a trace II-II of Figure 2;
- Figure 4 is a view of the suspension of the invention according to the arrows IV in Figure 2 and Figure 5;
- Figure 5 is a perspective view of the suspension of the invention according to the arrow V of Figure 2; and
- Figure 6 illustrates an application of the suspension according to the invention to a frame of a motor vehicle.

### Detailed description

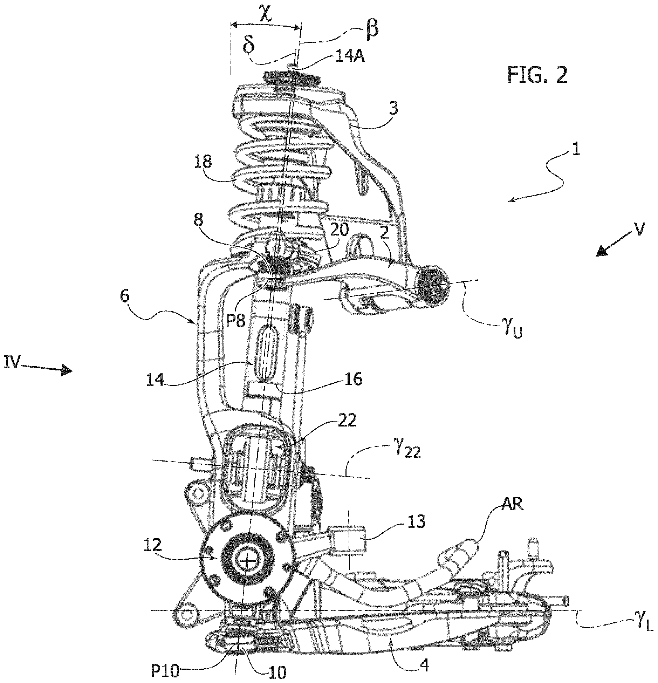

The reference number 1 in Figure 2 designates as a whole a steering articulated-quadrilateral suspension for a motor vehicle. The suspension 1 can be adapted indifferently either to a driving steering wheel or to a driven steering wheel. In the preferred embodiment illustrated herein, the suspension 1 is a suspension of the so-called high-quadrilateral type with damper constrained to a hub carrier.

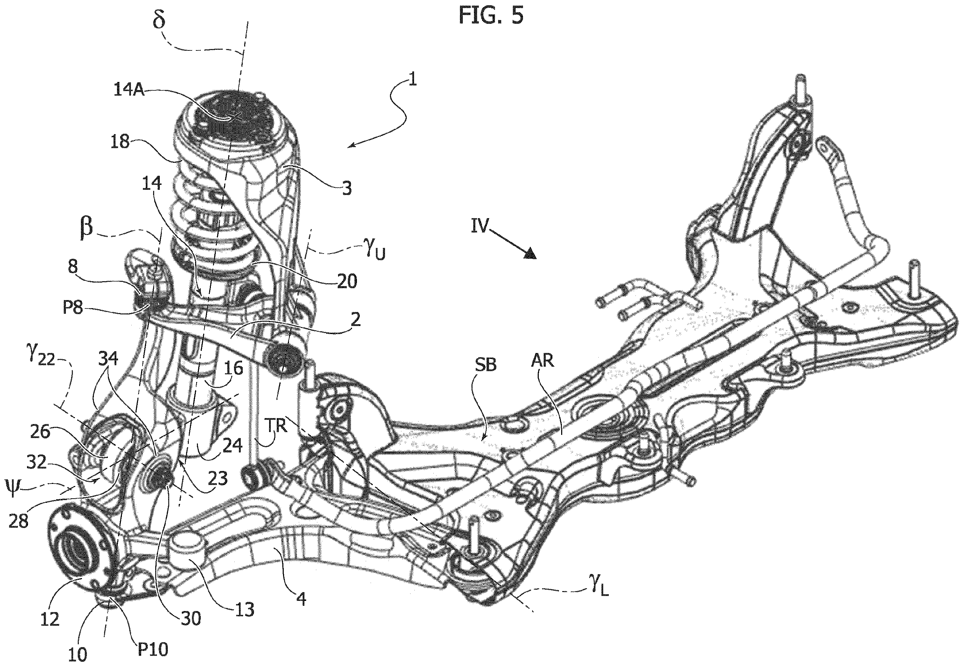

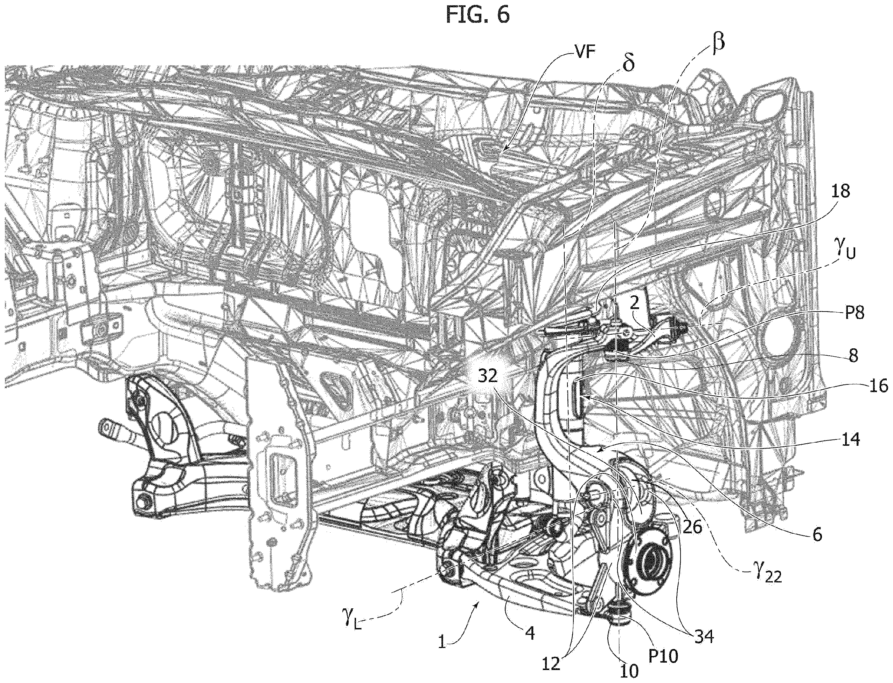

The suspension 1 comprises, as for the suspension S of a known type: an upper oscillating arm 2 connected in an articulated way to a frame of the motor vehicle about a first axis γ_{U}, in particular to a dome bearing 3 fixed inside a dome of a frame VF of a motor vehicle (Figure 6); a lower oscillating arm 4 connected in an articulated way to the frame of the motor vehicle about a second axis γ_{L}, in particular connected in an articulated way to a subframe SB (Figure 5), which is in turn connected to the vehicle frame VF; and a hub carrier 6 connected in an articulated way to the arm 2 and to the arm 4 at two spherical articulations 8, 10, respectively.

The articulations 8, 10 are located in respective articulation points P8, P10 and are obtained, in a way in itself known, by means of ball joints. Passing through the articulation points P8, P10 is a steering axis β with orientation such as to define a longitudinal angle of incidence χ (or caster angle, in this case positive) and a transverse angle of incidence ϕ (or king-pin angle).

The axes γ_{U} and γ_{L} are skewed with respect to one another, and the arms 2, 4 are preferably made of a single piece, meaning thereby that each arm 2, 4 comprises integral elements or elements coupled together to define a triangular configuration in which two "vertices" provide the articulation points passing through which are the axis γ_{U} for the upper arm and the axis γ_{L} for the lower arm, and a third "vertex" is located in the points P8, P10, respectively. In other embodiments, it is possible to obtain each arm by coupling two distinct elements in a triangular or quadrilateral configuration, defining - according to the cases - a suspension 1 with semi-virtual or virtual steering axis.

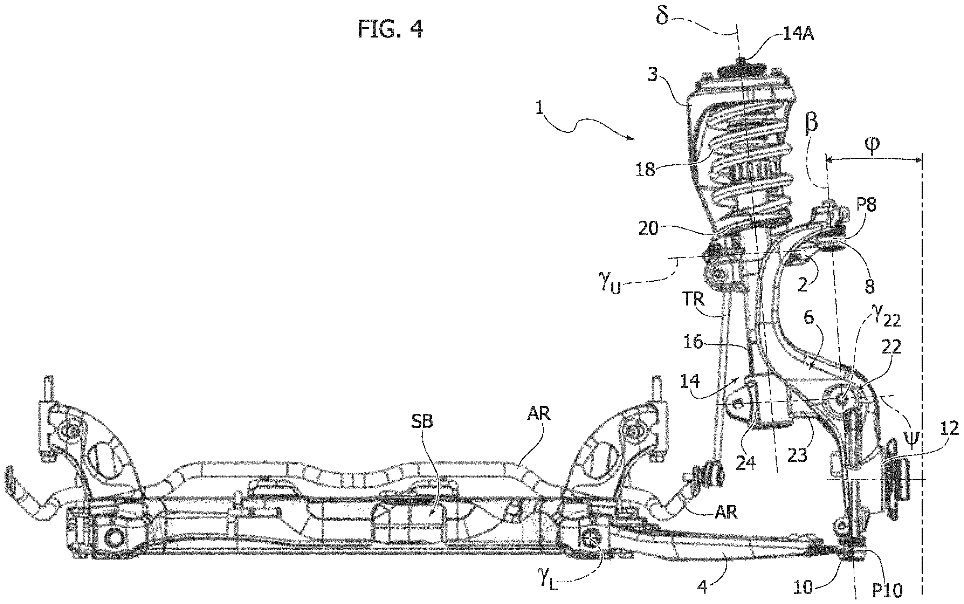

The hub carrier 6 supports, in a rotatable way, a hub 12 of a driving type (as in Figures 2-6) or of a driven type, for example for rear-drive vehicles, integral with (or in any case coupled to) a steering arm 13 by means of which the steering command generated by the driver is imparted. In a way in itself known, the steering command imparted via the arm 13 results in a rotation of the hub carrier 6 about the axis β, which in turn results in a corresponding drift of the wheel coupled to the hub 12.

An elastic-damping assembly 14 of the suspension 1 comprises a damper 16 with longitudinal axis δ, mounted coaxially with respect to which is a coil spring 18. The damper 16 is built in a way in itself known, and in general comprises a cylinder and a stem mobile relative to the cylinder.

The coil spring 18 is installed between a flange 20 fixed with respect to the cylinder of the damper 18 and the dome bearing 3, which also receives a first end of the damper 16, in particular an end (top) of the stem of the damper 16.

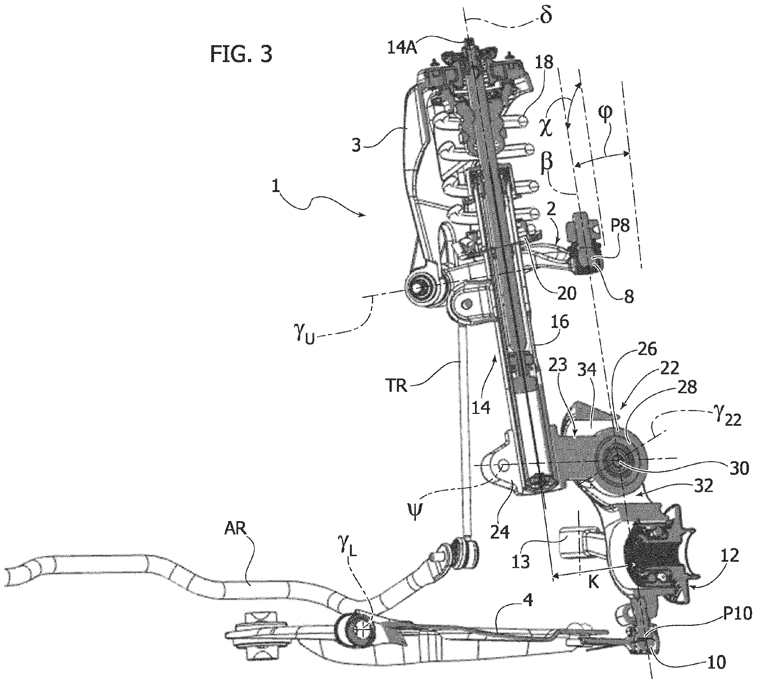

According to the invention, the cylinder of the damper 18 is connected in an articulated way to the hub carrier 6 at a single articulation 22 with axis of articulation γ₂₂ incident on the steering axis β and skewed with respect to the axis δ. Preferably, the axis γ₂₂ is orthogonal to the steering axis β and is likewise orthogonal to an axis ψ homologous to the axis X2 of the suspension S of Figure 1, where the axis ψ is an axis incident on and orthogonal to the steering axis β and at the same time incident on the axis δ. The axis ψ is likewise the reference direction along which the distance K highlighted in Figure 1 and in Figure 3 is measured.

The articulation 22 is in particular obtained by means of an elastic bushing (e.g., a bushing with double shoulder) and may be seen in Figure 3. The articulation 22 is situated above the hub 12.

In greater detail, the articulation 22 (Figure 3) comprises a connection element 23 (for example, obtained by casting of metal material, preferably aluminium alloy), which in turn includes a first rigid bushing 24 that receives a second end of the damper 16, in particular an end (bottom) of the cylinder of the damper 16 (and is consequently set with an orientation coinciding with the axis δ), and a second rigid bushing 26 sharing the axis γ₂₂. The rigid bushing 26 forms a seat, which receives an elastic bushing 28 - preferably a double-shoulder bushing - mounted sharing the axis γ₂₂ and fitted on a pin 30, which also shares the axis γ₂₂ and is supported by the hub carrier 6. For this purpose, the hub carrier is provided with an opening 32 that defines two seats 34 for supporting the pin 30.

With reference to Figures 2 to 6, the latter illustrates installation of the suspension on a vehicle frame VF and the location of the notable axes β, ψ, γ₂₂, γ_{U}, γ_{L}, δ, with respect to the vehicle frame VF and in space. The suspension 1 operates as a whole like a high-quadrilateral suspension of a known type, for example the suspension of Figure 1. During shaking, the arms 2 and 4 oscillate about the respective axes γ_{U} and γ_{L} in response to movements of the hub carrier 6 caused by contact of the wheel with the ground and/or movements of the suspended mass of the vehicle (basically the frame) with respect to the non-suspended mass. In a way in itself known, the movements of the hub carrier 6 with respect to the vehicle frame VF likewise result in application of a force at the ends of the antiroll bar AR via the tie rod TR in order to contain the roll of the frame of the vehicle.

Unlike the suspension of a known type illustrated in Figure 1, the steering behaviour is, however, considerably improved: the rotational movement of the hub carrier 6 about the steering axis β is affected to a negligible extent by possible perturbations induced by the articulation 22 between the damper 16 and the hub carrier 6. The reason for this is that the articulation 22 has its axis γ₂₂ incident on the steering axis β, which substantially prevents the articulation itself from generating moments with respect to the steering axis β. The presence of an elastic bushing 28 in the articulation 22 enables it to follow all the relative movements between the rigid bushing 24 - rigidly connected to the damper 16 - and the pin 30 (more in general, the axis γ₂₂), which is, instead, fixed with respect to the hub carrier 6 thanks to the seats 34. In this sense, the bushing 28 follows an oscillatory motion (the envelope of which is a double cone) of the axis γ₂₂ substantially centred on the axis β, in such a way that the variation of position of the axis γ₂₂ does not generate any moment with respect to the axis β itself.

It should moreover be noted that the construction of the articulation 22 as an articulation with single axis incident on the steering axis likewise enables reduction of the distance K thanks to the elimination of an articulation stage: in the suspension S of a known type, the two articulation stages (ball joint and elastic bushing) are in fact aligned in the direction defined by the distance K and contribute to the increase in the distance itself. In this sense, the elimination of the ball joint that occupies the articulation in the point P1 and the replacement of the articulation in the point P2 with the articulation 22, and specifically the bushing 30 with axis incident on the steering axis β, enables approach of the axis δ to the axes β and γ₂₂, thus reducing the moment acting on the elastic damping assembly 14.

Of course, the details of construction and the embodiments may vary widely with respect to what has been described and illustrated herein, without thereby departing from the scope of the present invention as defined by the annexed claims.

## Claims

1. A steering suspension (1) of an articulated-quadrilateral type for a motor vehicle, comprising:
- an upper oscillating arm (2), which can be connected in an articulated way to a frame (3) of a motor vehicle about a first axis (γ_{U});
- a lower oscillating arm (4), which can be connected in an articulated way to a frame (SB) of a motor vehicle about a second axis (γ_{U});
- a hub carrier (6) connected in an articulated way to the upper oscillating arm (2) at a first spherical articulation (8) and to the lower oscillating arm (4) at a second spherical articulation (10), the first spherical articulation (8) and the second spherical articulation (10) defining a steering axis (β) of said suspension (1); and
- an elastic-damping assembly (14) comprising a damper (16) having a longitudinal axis (δ),
wherein:
a first end (14A) of said damper (16) can be connected to the frame (VF) of said motor vehicle; and
a second end of said damper (16) is connected in an articulated way to said hub carrier (6) by means of an articulation (22) having an axis (γ₂₂) incident on said steering axis (β) and incident on a further axis (ψ), which is in turn incident on and orthogonal to the steering axis (β) and incident on the longitudinal axis (δ) of said damper (16).

2. The suspension (1) according to Claim 1, wherein the axis (γ₂₂) of said articulation (22) is orthogonal to said steering axis (β).

3. The suspension (1) according to Claim 1, wherein said articulation (22) comprises an elastic bushing (28), which shares the axis (γ₂₂) of said articulation (22).

4. The suspension (1) according to Claim 3, wherein said articulation (22) comprises a first rigid bushing (24), which receives the second end of said damper (16) and a second rigid bushing (26), which shares the axis (γ₂₂) of said articulation that receives said elastic bushing (28).

5. The suspension (1) according to Claim 3 or Claim 4, wherein said elastic bushing (28) is fitted on a pin (30) that shares the axis (γ₂₂) of said articulation (22), said pin (30) being supported by said hub carrier (6).

6. The suspension (1) according to Claim 5, wherein said hub carrier (6) is provided with an opening (32) that defines two seats (34) for supporting said pin (30).

7. The suspension (1) according to any one of the preceding claims, wherein the axis (γ₂₂) of said articulation (22) is skewed with respect to the longitudinal axis of said damper (16).

8. The suspension in accordance with any one of the preceding claims, wherein said damper comprises a stem and a cylinder, the stem being mobile with respect to the cylinder, and wherein the first end of the damper (16) is an end of said stem and the second end of the damper (16) is an end of said cylinder.

9. The suspension in accordance with Claim 1 or Claim 8, wherein said upper oscillating arm (2) is connected in an articulated way to a dome bearing (3), which can be installed in a dome of the frame (VF) of a motor vehicle, said dome bearing (3) receiving said first end (14A) of the damper (16).

10. The suspension (1) according to Claim 1, wherein the first axis (γ_{U}) and the second axis (γ_{L}) are skewed.

11. The suspension (1) according to Claim 1 or Claim 9, wherein said elastic-damping assembly (14) further comprises a coil spring (18) set sharing the longitudinal axis (δ) of said damper (16).

12. The suspension (1) according to Claim 11, wherein said coil spring (18) is mounted between a flange (20) fixed with respect to the cylinder of said damper (16) and said dome bearing (3).

13. The suspension (1) according to any one of the preceding claims, wherein said articulation (22) is a single articulation.

14. The suspension (1) according to Claim 3 or Claim 13, wherein said elastic bushing (28) is configured for following a relative movement of a second rigid bushing (26) with respect to the axis (γ₂₂) of said articulation (22) .
